# EUROPEAN PATENT SPECIFICATION

(11) **EP 2 923 484 B1**
(45) Date of publication and mention of the grant of the patent: **25.01.2017**
(21) Application number: 13818185.4
(22) Date of filing: 25.11.2013
(51) Int. Cl.: G06T 7/00, G06T 19/00, H04N 5/222

(54) **A METHOD FOR OBTAINING AND INSERTING IN REAL TIME A VIRTUAL OBJECT WITHIN A VIRTUAL SCENE FROM A PHYSICAL OBJECT**
VERFAHREN ZUM ERHALT EINES VIRTUELLEN OBJEKTES INNERHALB EINES VIRTUELLEN STUDIOS VON EINEM REALEN OBJEKT
PROCÉDÉ D'OBTENTION D'UN OBJET VIRTUEL DANS UN STUDIO VIRTUEL À PARTIR D'UN OBJET RÉEL

(30) Priority: 26.11.2012 EP 12007951
(43) Date of publication of application: 30.09.2015
(73) Proprietor: Brainstorm Multimedia, S.L., 46005 Valencia (ES)
(72) Inventor: RODRIGUEZ GARCIA, Rafael, E-46010 Valencia (ES); MONTESA ANDRÉS, Ricardo, E-46005 Valencia (ES)
(74) Representative: Ungria López, Javier
(86) International application number: PCT/EP2013/003546
(87) International publication number: WO 2014/079585

(56) References cited:
- US-A- 5 696 892
- US-A- 5 737 031
- US-A- 6 084 590
- US-A1- 2003 202 120
- US-A1- 2010 208 057

## Description

### Field of the art

The invention relates to the field of virtual or imaging systems applied to digital cinema, video production and/or television broadcast, and in particular it relates to a method that obtains and also inserts, in real time, a virtual object, usually a talent, within a virtual scene from a physical object.

The present invention refers to the talent as the person that will conduct a TV program, but the invention is here applied to any subject, any animated or static object captured by a camera in real time.

The scene can be virtual if it has been created and rendered synthetically or real if it is captured by a camera in real time.

### Background of the invention

The systems that allow said kind of insertion or integration of virtual objects are usually referred as Virtual sets or Virtual Studios and the techniques used for that purpose are categorized by two possible methods called 'tracking systems' or 'trackless systems'.

Tracking systems: The technique for a Tracking system consists of mixing by chroma-keying two images: one provided by a physical camera capturing the talent over a uniform color background and another provided by a computer which is being fed in real time with the physical camera intrinsic and extrinsic parameters so that it can calculate a three-dimensional image whose virtual camera perspective matches the physical camera one.

Trackless systems: The technique for a Trackless system can be understood as the simile in real life of a sticker with the talent picture painted on it and thus the sticker can be positioned freely anywhere in the virtual space and seen from any camera position by orienting the sticker to the camera. It is a simple method which is less rigorous than the Tracking system but yet can produce a convincing effect. In this technique instead of composing in the final stage the real and virtual images, the real image of the talent is incorporated as one more virtual element in the virtual scene. This way it is not necessary to match the virtual camera to the real one, nor therefore any camera tracking system is necessary and the virtual camera can move freely in the virtual scene.

Generally a trackless technique is characterized by: a) capturing from a physical camera the talent image over a uniform color background and b) feeding that image to a computer and chroma-keying and mapping the image over a virtual object. As a result the virtual object simulates the real talent and it can be placed freely in the virtual environment.

This virtual object can be just a flat surface defined totally independent of its position and it is necessary to place it correctly in the virtual scene so as to limit unwanted artifacts because:
- As the virtual object can be flat and of negligible thickness, it must be continuously oriented towards the virtual camera and kept vertical so that the image is correctly visualized from the selected viewpoint.
- As the virtual object has to swivel to camera, an axis must be selected for it to pivot around. The vertical axis which passes through the center of the captured image is considered the most appropriate. The talent must therefore not move away from the center of this image, so when the virtual object swivels, it will stop the talent's silhouette from sliding across the floor of the virtual set.
- The talent's silhouette must fit totally inside the whole captured image; some security margins are needed to ensure that the silhouette is fully captured at all times. Once the security margin below the image has been chosen, the correct position of the virtual object has to be set so that the talent's feet are resting over the virtual set's floor. The talent must not move towards or away from the physical camera to ensure that the feet are always resting on the virtual floor.
- Finally, if the aim is to shoot close-ups using a virtual camera, the shot of the talent must be of the highest possible resolution so that any lack of resolution will not be seen in the resulting close-up.

Both tracking and trackless techniques present some limitations and advantages:

### Trackless limitations:

- The Trackless technique is not a rigorous solution and with limited use.
- The composition between talent and background is not accurate because the talent perspective does not necessarily match the virtual scene perspective.
- The physical camera needs to stay static in a fixed position and orientation.
- The talent has to stay always in front of the physical camera and at the right distance from it to ensure that the feet rest always on the floor of the virtual set.
- The talent has to stay in the center of the image so the feet do not slide across the floor when swiveling the virtual object towards the virtual camera.

### Trackless benefits:

- The virtual camera can be moved freely in the virtual scene.
- The needed hardware is inexpensive, and easy to use and maintain.

### Tracking limitations:

- The devices for obtaining camera tracking and the methods to calibrate those values to recreate a virtual camera that matches the physical camera are complex and never totally accurate.
- The system requires a big amount of support and maintenance.
- The needed hardware is expensive, and complex to support and maintain.
- The virtual camera cannot move freely as it is driven by the physical camera parameters

### Tracking benefits:

- The system can provide the best integration between real and virtual objects.
- Modifying the physical camera zoom does not affect the quality of the virtual object image resolution.

There are several companies providing trackless systems virtual sets, and which use a graphics engine that embeds the captured image as one more element in the virtual set. The main ones are Brainstorm Multimedia®, Monarch®, Hybrid®, NewTek®, RossVideo®, etc. Although there has been no company to date which goes farther and in any event the obtained results suffer from the previously mentioned artifacts and problems. The present invention is related to this scenario, and it is aimed at removing the mentioned artifacts, not only when mixing the talent in virtual scenarios but also inserting the talent on a real footage when the camera provides tracking information.

US-A-2003/202120 discloses a virtual lighting system and proposes knowing the position of a camera and a talent, re-light talent's silhouette and getting higher color insertions of better quality.

US-A-5696892 reveals insert image animated sequences in virtual scenarios.

US-A- 6084590 discloses a method of media production in which to-dimensional images captured from physical objects are analyzed to create three-dimensional representations of the physical objects within a virtual stage and keeping a correlation between representations of the objects in the virtual stage and corresponding segments of the at least one image stream.

### Summary of the Invention

The proposed invention unifies both techniques, tracking and trackless, by expanding the trackless technique to use tracking cameras and solving the limitations of trackless systems while still allowing for the benefits of both techniques.

To that end, there is provided a method for obtaining in real time a virtual object within a virtual scene from a physical object, comprising as commonly known in the field:
- capturing from a physical camera an image of said physical object against a background;
- extracting a silhouette of said physical object from the captured image and mapping it over a three dimensional geometry obtaining said virtual object;
- incorporating said virtual object as one more element in the virtual scene; and
- orienting said virtual object with regard to the virtual camera in order to avoid said virtual object being rendered edgewise.

On contrary of the known proposals and in a characteristic manner, the provided method further comprises:
- obtaining and using intrinsic and/or extrinsic parameters of said physical camera and said captured image to calculate said physical object position;
- projecting back said captured image over the three dimensional geometry using those known physical camera intrinsic and/or extrinsic parameters; and
- placing the virtual object in the virtual scene and selecting an axis of rotation to orient the virtual object with regard to the virtual camera based on said calculated position of the physical object.

According to an embodiment, the virtual camera matches the movement of a second tracked physical camera which provides the background image of the virtual scene.

The virtual object position is determined by calculating at least the coordinates of the lowest point of said captured image of said physical object against said background, said background being a color flat surface.

The method further determines the intersection of the beam direction from at least said camera nodal point with the floor and calculates from said intersection the position of the physical object providing a horizontal plane position of the virtual object. At each moment, in real time, the beam direction from said lowest point of the physical object in the captured image to the nodal point of the camera is calculated and then the physical object position can be recalculated in reference to the capturing camera.

According to an embodiment, the axis which passes through the center of said physical object in the captured image for rotating said virtual object is selected.

According to an embodiment, the intrinsic and/or extrinsic parameters of said physical camera are provided in real time by a camera tracking system that opens the option to move it freely while capturing the physical object.

A plurality of movements of said physical object to the virtual object can be calculated then in reference to the main reference system, preferably at each moment in real time.

The method further corrects perspective effects of said captured image in said projecting back step.

The method allows positioning the virtual object at any location within said virtual scene so that can freely move towards or away from the camera.

According to yet another embodiment, based on a blurred mask of the physical object against said background, the virtual object can be provided with volume and/or extrusion, i.e. it does not have to be a flat surface. In a first step the talent's silhouette in white over a black background, is blurred, the resulting image's gray levels are then converted then into extrusion displacements, and finally, based on this data, the three dimensional model is created that will provide certain three-dimensional properties and will allow casting or receiving shadows.

A second camera can be also used for capturing the physical object image, said at least second camera mapping said physical object image on said virtual object.

Therefore, the method differentiates from the tracking technique because it is not the result of mixing by chroma-keying two images. Instead it is inherits the characteristics mentioned in the trackless technique: a) capturing from a camera the talent image over a uniform color background and b) feeding that image to a computer and chroma-keying and mapping the image over a virtual object.

Moreover, the virtual object that represents said talent is dynamically remapped and repositioned in the virtual scene using only the physical camera parameters and its captured image.

As a result, the proposed method removes the aforementioned artifacts when the virtual camera position matches the real one, while minimizing them from other virtual camera positions. This way it provides the benefits of both, trackless and tracking techniques simultaneously.

The proposed invention differentiates from the traditional techniques in:
- As opposed to the trackless technique, the talent's captured image is dynamically projected over the virtual object from a position that matches continuously the physical camera position. Moreover, the virtual object cannot be positioned freely anymore. To avoid the aforementioned artifacts, the virtual object position relative to the position from where the image is projected is now limited to be the one that matches the position of the talent relative to the physical camera. In addition, the physical camera does not need to be in a fixed position and orientation. The physical camera can move freely in the real world as long as it provides tracking information.
- As opposed to the tracking technique, the virtual camera can now move freely in the three-dimensional world. It will provide a full accurate composition when its position coincides with the physical camera position and an approximation when moving apart from it. Furthermore, the talent can move freely in the real world as long as the physical camera is always capturing him.

### Brief Description of the Drawings

The previous and other advantages and features will be more fully understood from the following detailed description of embodiments, with reference to the attached, which must be considered in an illustrative and non-limiting manner, in which:

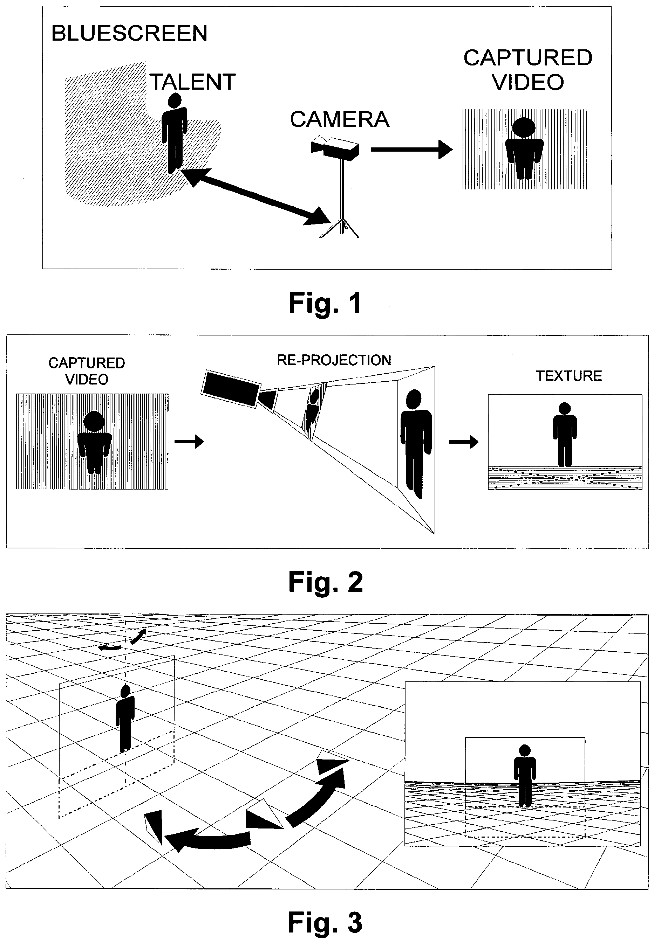

Fig. 1 is an illustration representing a monitoring system without camera tracking.
Fig. 2 is an illustration of a re-projection of a texture to eliminate the effects of conic projection in the camera shot.
Fig. 3 is an illustration representing the orientation of the virtual object to the camera.

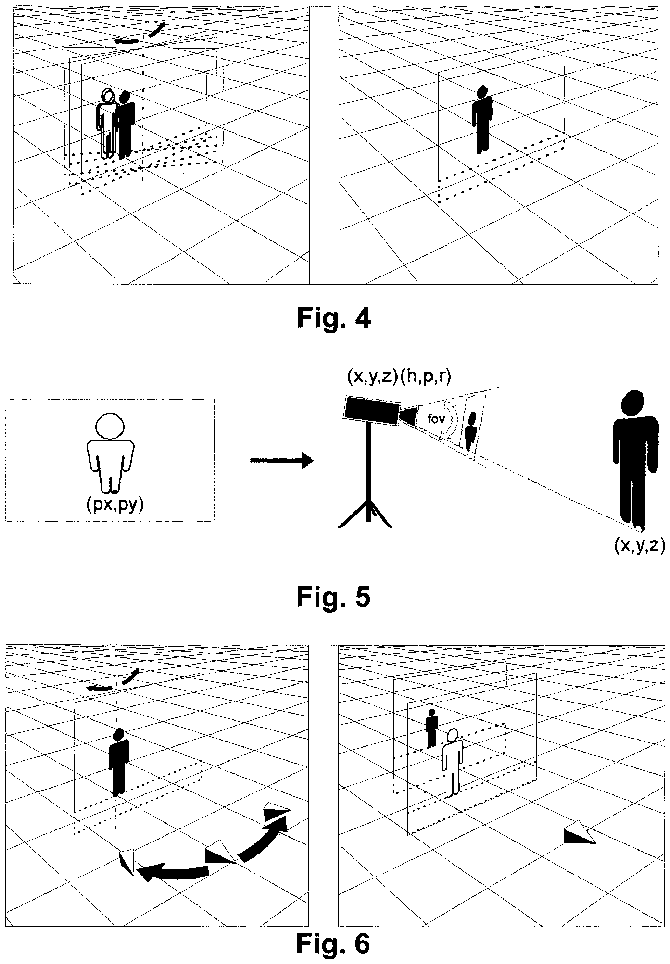

Fig. 4 is an illustration showing the artifacts produced when the talent is not correctly placed within a virtual set.
Fig. 5 is an illustration showing the calculation of the talent's position from the captured image, according to an embodiment of the present invention.
Fig. 6 is an illustration showing how to relocate the virtual object and its axis in order to solve the artifact issue, according to an embodiment of the present invention.

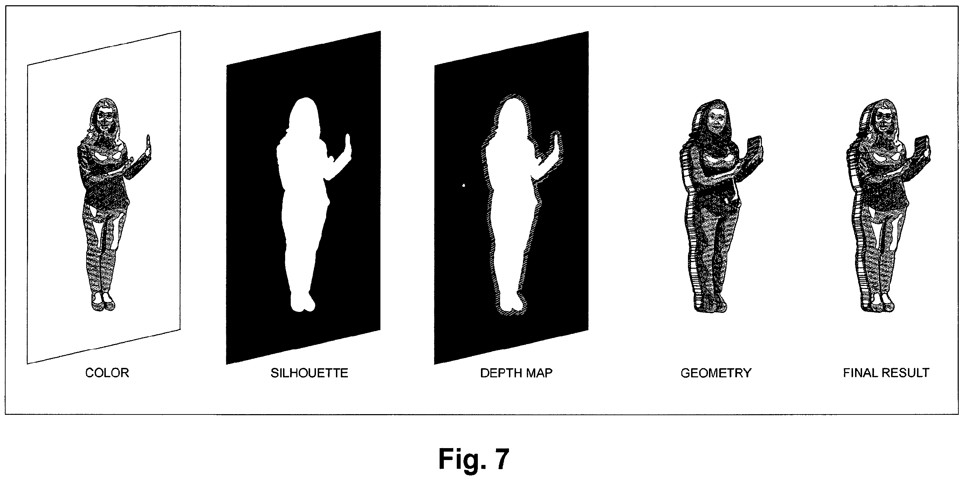

Fig. 7 is an illustration showing the process of providing volume to the talent's silhouette.

### Description of Several Embodiments

Being an aim of the proposed invention to provide trackless systems with extra functionality as freeing the talent movements around the virtual studio, it is necessary to obtain the talent's position in order to place the three-dimensional model accordingly.

For tracking the talent's position, the method proposed in the present invention has the advantage of not requiring any additional equipment given that it can use the image from the same camera that captures the talent, or, alternatively, it can also be obtained by any other camera which is in the virtual studio.

The intention is to reduce the complexity of tracking the talent's feet, and the fact that these must always be seen touching the floor actually simplifies the problem enormously. The talent silhouette algorithm calculates its lowest point in the image against a background colour flat surface, which is assumed to be the point which corresponds to the talent's feet.

Therefore, if a flat or extruded silhouette is taken as the best approximation for the talent's three dimensional form, the proposed method then adds the information about its position and so enables the location and alignment within the virtual scene.

From the position of the talent's feet in the captured image and the optical configuration of the relevant camera it is then possible to calculate the direction the beam travels from their feet to the nodal point of the camera sensor.

Once this angle is known, along with the camera position and orientation, it's possible to determine the final beam angle which intersects with the floor and gives the tridimensional position of the talent's feet.

The physical camera can be fixed, in which case no tracking system is needed. But if said physical camera is provided with a tracking system, it can be moved in real time and its changing positions and orientations can be fed into the algorithm dynamically.

Once the talent's position is known, the location of the virtual object and its axis of rotations can be determined in real-time, which enables them to be correctly positioned on their precisely calculated spot.

To avoid any lateral displacement of the talent, the invention automatically moves the virtual object and axis so that there is no possibility of the talent's silhouette sliding across the virtual floor. The movement to rotate the virtual object to face the camera comes always from the axis which passes through the center of the talent's silhouette.

The method proposed in the present invention can take advantage of systems commonly seen in traditional virtual studios, but it removes the need of using many of them; it also removes the need for maintenance or lens calibration. The only equipment strictly necessary for this method is a cyclorama, a camera and a workstation. This therefore lowers the equipment costs to that of systems which do just use common cameras.

In addition, the proposed invention is able to produce viewpoints and angles which are impossible with conventional systems.

If only one single camera is involved; it films and tracks the talent. This is why the talent's whole image is needed. However the option of adding an auxiliary or second camera for tracking shots is also possible, which increases the main camera's flexibility, allowing it to change angle or do close-ups.

The system can be extended with another tracked camera which provides a real background image of the virtual scene, where the talent can be inserted seamlessly if the virtual camera matches the background capturing camera.

The foregoing describes embodiments of the present invention and modifications, obvious to those skilled in the art can be made thereto, without departing from the scope of the present invention.

## Claims

1. A method for obtaining and inserting in real time a virtual object within a virtual scene from a physical object, comprising performing dynamically the following actions:
- capturing from a physical camera an image of a physical object against a background;
- extracting a silhouette of said physical object from the captured image and mapping the captured image over a three dimensional geometry obtaining a virtual object;
- incorporating said virtual object as one more element in the virtual scene; and
- orienting said virtual object with regard to a virtual camera in order to avoid said virtual object being rendered edgewise,
**characterized in that** the method further comprises:
- obtaining and using intrinsic and extrinsic parameters of said physical camera and said captured image of the physical object to calculate a position of said physical object, and determining a position of said virtual object by calculating at least the coordinates of the lowest point of said captured image of said physical object against said background;
- placing the virtual object in said calculated position of said physical object within the virtual scene and selecting an axis of rotation to orient the virtual object with regard to the virtual camera based on said calculated position of the physical object; and
- projecting back said captured image over the three dimensional geometry using said physical camera intrinsic and extrinsic parameters.

2. A method according to claim 1, wherein it comprises selecting the axis which passes through the center of said physical object in the captured image for rotating said virtual object.

3. A method according to claim 1, wherein it comprises the use of a camera tracking system providing said physical camera intrinsic and extrinsic parameters in real time and opening the option to move said physical camera freely while capturing the physical object.

4. A method according claim 1, wherein said virtual camera matches the movement of a second tracked physical camera which provides the background image of the virtual scene.

5. A method according to claim 1, wherein it comprises transferring a plurality of movements of said physical object to said virtual object.

6. A method according to claim 5, comprising transferring said plurality of movements at each moment in real time.

7. A method according to claim 1, wherein it comprises further calculating a beam direction from said lowest point of the physical object in said captured image to the nodal point of at least said camera.

8. A method according to claim 7, wherein it further comprises determining the intersection of said beam direction from at least said camera nodal point with the floor and calculating from said intersection the position of said physical object providing an horizontal plane position of the virtual object.

9. A method according to claim 1, comprising correcting perspective effects of said captured image in said projecting back step.

10. A method according to claim 1, comprising capturing said physical object image by at least a second camera, said at least second camera mapping said physical object image on said virtual object.

11. A method according to any of previous claims, wherein it comprises positioning said virtual object at any location within said virtual scene.

12. A method according to claim 1, wherein it comprises providing volume and/or extrusion to said virtual object obtained from said captured image of said physical object mapped on a three dimensional model.

13. A method according to claim 12, wherein said volume and/or extrusion of said virtual object is based on a blurred mask of said physical object against said background.

14. A method according to claim 12, wherein said volume is used in order to cast or receive shadows on virtual objects or from virtual objects in the scene.

## Patentansprüche

1. Verfahren zum Erzeugen eines virtuellen Objektes aus einem physischen Objekt und Einfügen in eine virtuelle Szene in Echtzeit, das dynamisches Durchführen der folgenden Vorgänge umfasst:
Aufnehmen eines Bildes eines physischen Objektes vor einem Hintergrund mit einer physischen Kamera;
Extrahieren einer Silhouette des physischen Objektes aus dem aufgenommenen Bild und Abbilden des aufgenommenen Bildes auf einer dreidimensionalen Geometrie, um so ein virtuelles Objekt zu erzeugen;
Integrieren des virtuellen Objektes als ein weiteres Element in die virtuelle Szene; und
Ausrichten des virtuellen Objektes in Bezug auf eine virtuelle Kamera, um zu vermeiden, dass das virtuelle Objekt hochkant wiedergegeben wird,
**dadurch gekennzeichnet, dass** das Verfahren des Weiteren umfasst:
Ermitteln und Verwenden intrinsischer und extrinsischer Parameter der physischen Kamera und des aufgenommenen Bildes des physischen Objektes, um eine Position des physischen Objektes zu berechnen, und Bestimmen einer Position des virtuellen Objektes durch Berechnen wenigstens der Koordinaten des niedrigsten Punktes des aufgenommenen Bildes des physischen Objektes vor dem Hintergrund;
Anordnen des virtuellen Objektes an der berechneten Position des physischen Objektes innerhalb der virtuellen Szene und Auswählen einer Drehungssachse zum Ausrichten des virtuellen Objektes in Bezug auf die virtuelle Kamera auf Basis der berechneten Position des physischen Objektes; sowie
Zurückprojizieren des aufgenommenen Bildes auf die dreidimensionale Geometrie unter Verwendung der intrinsischen und extrinsischen Parameter der physischen Kamera.

2. Verfahren nach Anspruch 1, wobei es umfasst, dass die Achse, die durch die Mitte des physischen Objektes in dem aufgenommenen Bild hindurch verläuft, zum Drehen des virtuellen Objektes ausgewählt wird.

3. Verfahren nach Anspruch 1, wobei es den Einsatz eines Kamera-Tracking-Systems umfasst, das die intrinsischen und extrinsischen Parameter der physischen Kamera in Echtzeit bereitstellt und die Möglichkeit bietet, die physische Kamera beim Aufnehmen des physischen Objektes frei zu bewegen.

4. Verfahren nach Anspruch 1, wobei sich die virtuelle Kamera an die Bewegung einer zweiten verfolgten physischen Kamera anpasst, die das Hintergrundbild der virtuellen Szene bereitstellt.

5. Verfahren nach Anspruch 1, wobei es Übertragen einer Vielzahl von Bewegungen des physischen Objektes auf das virtuelle Objekt umfasst.

6. Verfahren nach Anspruch 5, das umfasst, dass die Vielzahl von Bewegungen zu jedem Moment in Echtzeit übertragen werden.

7. Verfahren nach Anspruch 1, wobei es des Weiteren Berechnen einer Strahlrichtung von dem tiefsten Punkt des physischen Objektes in dem aufgenommenen Bild zu dem Knotenpunkt wenigstens der Kamera umfasst.

8. Verfahren nach Anspruch 7, wobei es des Weiteren umfasst, dass der Schnittpunkt der Strahlrichtung wenigstens von dem Kamera-Knotenpunkt mit dem Boden bestimmt wird und anhand des Schnittpunktes die Position des physischen Objektes berechnet wird und damit eine Position des virtuellen Objektes in einer horizontalen Ebene bereitgestellt wird.

9. Verfahren nach Anspruch 1, das umfasst, dass Perspektiveffekte des aufgenommenen Bildes in dem Schritt des Zurückprojizierens korrigiert werden.

10. Verfahren nach Anspruch 1, das umfasst, dass das physische Objekt mit wenigstens einer zweiten Kamera aufgenommen wird, wobei die wenigstens eine zweite Kamera das Bild des physischen Objektes auf dem virtuellen Objekt abbildet.

11. Verfahren nach einem der vorangehenden Ansprüche, wobei es umfasst, dass das virtuelle Bild an jedem beliebigen Ort innerhalb der virtuellen Szene positioniert wird.

12. Verfahren nach Anspruch 1, wobei es umfasst, dass dem virtuellen Objekt, das aus dem auf einem dreidimensionalen Modell abgebildeten aufgenommenen Bild des physischen Objektes gewonnen wird, Volumen und/oder Extrusion verliehen werden/wird.

13. Verfahren nach Anspruch 12, wobei das Volumen und/oder die Extrusion des virtuellen Objektes auf einer Unschärfemaske des physischen Objektes vor dem Hintergrund basieren/basiert.

14. Verfahren nach Anspruch 12, wobei das Volumen dazu dient, Schatten auf virtuelle Objekte zu werfen oder von virtuellen Objekten in der Szene zu empfangen.

## Revendications

1. Procédé pour obtenir et insérer en temps réel un objet virtuel dans une scène virtuelle à partir d'un objet physique, comprenant l'exécution de manière dynamique des actions suivantes :
- la capture, par une caméra physique, d'une image d'un objet physique contre un arrière-plan ;
- l'extraction d'une silhouette dudit objet physique de l'image capturée et le mappage de l'image capturée sur une géométrie tridimensionnelle obtenant un objet virtuel ;
- l'incorporation dudit objet virtuel en tant qu'élément supplémentaire dans la scène virtuelle ; et
- l'orientation dudit objet virtuel en relation avec une caméra virtuelle afin d'éviter que ledit objet virtuel soit reproduit de côté,
**caractérisé en ce que** le procédé comprend en outre :
- l'obtention et l'utilisation de paramètres intrinsèques et extrinsèques de ladite caméra physique et de ladite image capturée de l'objet physique pour calculer une position dudit objet physique, et la détermination d'une position dudit objet virtuel en calculant au moins les coordonnées du point le plus bas de ladite image capturée dudit objet physique contre ledit arrière-plan ;
- le placement de l'objet virtuel dans ladite position calculée dudit objet physique dans la scène virtuelle et la sélection d'un axe de rotation pour orienter l'objet virtuel en relation avec la caméra virtuelle sur la base de ladite position calculée de l'objet physique ; et
- la projection de retour de ladite image capturée sur la géométrie tridimensionnelle en utilisant lesdits paramètres intrinsèques et extrinsèques de la caméra physique.

2. Procédé selon la revendication 1, dans lequel il comprend la sélection de l'axe qui passe par le centre dudit objet physique dans l'image capturée pour faire tourner ledit objet virtuel.

3. Procédé selon la revendication 1, dans lequel il comprend l'utilisation d'un système de suivi de caméra fournissant lesdits paramètres intrinsèques et extrinsèques de la caméra physique en temps réel et donnant la possibilité de déplacer ladite caméra physique librement tout en capturant l'objet physique.

4. Procédé selon la revendication 1, dans lequel ladite caméra virtuelle correspond au déplacement d'une deuxième caméra physique suivie qui fournit l'image d'arrière-plan de la scène virtuelle.

5. Procédé selon la revendication 1, dans lequel il comprend le transfert d'une pluralité de déplacements dudit objet physique audit objet virtuel.

6. Procédé selon la revendication 5, comprenant le transfert de ladite pluralité de déplacements à chaque moment en temps réel.

7. Procédé selon la revendication 1, dans lequel il comprend le calcul supplémentaire de la direction de faisceau dudit point le plus bas de l'objet physique dans ladite image capturée au point nodal d'au moins ladite caméra.

8. Procédé selon la revendication 7, dans lequel il comprend en outre la détermination de l'intersection de ladite direction de faisceau à partir au moins dudit point nodal de caméra avec le sol et le calcul à partir de ladite intersection de la position dudit objet physique fournissant une position de plan horizontal de l'objet virtuel.

9. Procédé selon la revendication 1, comprenant la correction des effets de perspective de ladite image capturée à ladite étape de projection de retour.

10. Procédé selon la revendication 1, comprenant la capture de ladite image d'objet physique par au moins une deuxième caméra, ladite au moins une deuxième caméra mappant ladite image d'objet physique sur ledit objet virtuel.

11. Procédé selon l'une quelconque des revendications précédentes, dans lequel il comprend le positionnement dudit objet virtuel à n'importe quel emplacement dans ladite scène virtuelle.

12. Procédé selon la revendication 1, dans lequel il comprend la fourniture d'un volume et/ou d'une extrusion audit objet virtuel obtenu à partir de ladite image capturée dudit objet physique mappé sur un modèle tridimensionnel.

13. Procédé selon la revendication 12, dans lequel ledit volume et/ou ladite extrusion dudit objet virtuel sont basés sur un masque flou dudit objet physique contre ledit arrière-plan.

14. Procédé selon la revendication 12, dans lequel ledit volume est utilisé afin de projeter ou de recevoir des ombres sur des objets virtuels ou à partir d'objets virtuels dans la scène.
